(19)

Europäisches
Patentamt
European
Patent Office
Office européen
des brevets

(11) **EP 4 604 477 A1**

(12) **EUROPEAN PATENT APPLICATION**

(43) Date of publication:
**20.08.2025 Bulletin 2025/34**

(21) Application number: **25154299.9**

(22) Date of filing: **28.01.2025**

(51) International Patent Classification (IPC):
**H04L 41/0833** (2022.01)   **H04L 41/0853** (2022.01)
**H04L 41/0894** (2022.01)   **H04L 43/16** (2022.01)
**H04W 28/02** (2009.01)   **H04W 52/02** (2009.01)
**H04L 41/142** (2022.01)   **H04L 41/0826** (2022.01)

(52) Cooperative Patent Classification (CPC):
**H04L 41/0853; H04L 41/0833; H04L 41/0894;**
**H04L 43/16; H04W 28/0221;** H04L 41/0826;
H04L 41/142; H04W 52/0206

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.02.2024 FI 20245199**

(71) Applicant: **Nokia Solutions and Networks Oy**
**02610 Espoo (FI)**

(72) Inventors:
• **VALCARCE RIAL, Alvaro**
  **Massy (FR)**
• **HATHIRAMANI, Navin**
  **Coppell (US)**
• **MANDELLI, Silvio**
  **Ludwigsburg (DE)**

(74) Representative: **Nokia EPO representatives**
**Nokia Technologies Oy**
**Karakaari 7**
**02610 Espoo (FI)**

(54) **OPTIMIZING ENERGY CONSUMPTION AND/OR CARBON DIOXIDE EMISSIONS OF ONE OR MORE NETWORK ELEMENTS**

(57)    Disclosed is a method comprising receiving, from one or more network elements of a radio access network or a core network, information indicating an energy production capability of the one or more network elements; determining one or more policies for optimizing at least one of energy consumption or carbon dioxide emissions of the one or more network elements, wherein the determination is based at least on the information indicating the energy production capability, and an energy demand level of one or more consumers of energy produced by the one or more network elements; and transmitting, to the one or more network elements, information indicating the one or more policies.

| 601 | Receive information indicating energy production capability |
|-----|-----|
| 602 | Determine one or more policies |
| 603 | Transmit information indicating the one or more policies |

**FIG. 6**

EP 4 604 477 A1

**Description**

TECHNICAL FIELD

The following example embodiments relate to communication systems and to energy production.

BACKGROUND

As energy resources are limited, it is desirable to optimize the usage of energy resources.

SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided an apparatus comprising at least one processor, and at least one memory storing instructions that, when executed by the at least one processor, cause the apparatus at least to: receive, from one or more network elements of a radio access network or a core network, information indicating an energy production capability of the one or more network elements; determine one or more policies for optimizing at least one of energy consumption or carbon dioxide emissions of the one or more network elements, wherein the determination is based at least on the information indicating the energy production capability, and an energy demand level of one or more consumers of energy produced by the one or more network elements; and transmit, to the one or more network elements, information indicating the one or more policies.

According to a second aspect, there is provided a method comprising: receiving, from one or more network elements of a radio access network or a core network, information indicating an energy production capability of the one or more network elements; determining one or more policies for optimizing at least one of energy consumption or carbon dioxide emissions of the one or more network elements, wherein the determination is based at least on the information indicating the energy production capability, and an energy demand level of one or more consumers of energy produced by the one or more network elements; and transmitting, to the one or more network elements, information indicating the one or more policies.

According to a third aspect, there is provided a computer program comprising instructions which, when executed by an apparatus, cause the apparatus to perform at least the following: receiving, from one or more network elements of a radio access network or a core network, information indicating an energy production capability of the one or more network elements; determining one or more policies for optimizing at least one of energy consumption or carbon dioxide emissions of the one or more network elements, wherein the determination is based at least on the information indicating the energy production capability, and an energy demand level of one or more consumers of energy produced by the one or more network elements; and transmitting, to the one or more network elements, information indicating the one or more policies.

According to a fourth aspect, there is provided a computer readable medium comprising program instructions which, when executed by an apparatus, cause the apparatus to perform at least the following: receiving, from one or more network elements of a radio access network or a core network, information indicating an energy production capability of the one or more network elements; determining one or more policies for optimizing at least one of energy consumption or carbon dioxide emissions of the one or more network elements, wherein the determination is based at least on the information indicating the energy production capability, and an energy demand level of one or more consumers of energy produced by the one or more network elements; and transmitting, to the one or more network elements, information indicating the one or more policies.

According to a fifth aspect, there is provided a non-transitory computer readable medium comprising program instructions which, when executed by an apparatus, cause the apparatus to perform at least the following: receiving, from one or more network elements of a radio access network or a core network, information indicating an energy production capability of the one or more network elements; determining one or more policies for optimizing at least one of energy consumption or carbon dioxide emissions of the one or more network elements, wherein the determination is based at least on the information indicating the energy production capability, and an energy demand level of one or more consumers of energy produced by the one or more network elements; and transmitting, to the one or more network elements, information indicating the one or more policies.

According to a sixth aspect, there is provided an apparatus comprising: means for receiving, from one or more network elements of a radio access network or a core network, information indicating an energy production capability of the one or more network elements; means for determining one or more policies for optimizing at least one of energy consumption or carbon dioxide emissions of the one or more network elements, wherein the determination is based at least on the information indicating the energy production capability, and an energy demand level of one or more consumers of energy produced by the one or more network elements; and means for transmitting, to the one or more network elements, information indicating the one or more policies.

According to a seventh aspect, there is provided the apparatus of the sixth aspect, wherein the one or more policies comprise at least one or more uplink and downlink load management patterns and one or more target power consumption levels.

According to an eighth aspect, there is provided the apparatus of the seventh aspect, further comprising means for receiving, from the one or more network elements, statistics related to compliance with the one or more uplink and downlink load management patterns.

According to a ninth aspect, there is provided the apparatus of any of the sixth to eighth aspects, wherein the one or more policies indicate one or more requirements for energy consumption that should or should not be exceeded for a period of time.

According to a tenth aspect, there is provided the apparatus of the ninth aspect, further comprising means for receiving, from the one or more network elements, statistics related to compliance with the one or more policies, wherein the statistics comprise metrics indicative of energy consumed by the one or more network elements relative to the one or more requirements.

According to an eleventh aspect, there is provided the apparatus of any of the sixth to tenth aspects, wherein the means for determining the one or more policies are configured to determine the one or more policies based further on a cost of energy consumed by the one or more network elements.

According to a twelfth aspect, there is provided the apparatus of any of the sixth to eleventh aspects, further comprising: means for estimating, based on the one or more policies, an amount of energy to be provided to the one or more consumers from the one or more network elements; and means for transmitting, to the one or more consumers, information indicating the estimated amount of energy to be provided.

According to a thirteenth aspect, there is provided the apparatus of any of the sixth to twelfth aspects, further comprising: means for receiving, from the one or more consumers, an indication indicating an energy need threshold above which energy from the one or more network elements is not needed; and means for transmitting, to the one or more network elements, an indication indicating the energy need threshold above which energy from the one or more network elements is not needed by the one or more consumers.

According to a fourteenth aspect, there is provided the apparatus of any of the sixth to thirteenth aspects, wherein the energy production capability of the one or more network elements is based on waste heat generated by the one or more network elements, and wherein the one or more consumers comprise one or more heat consumers of the waste heat generated by the one or more network elements.

According to a fifteenth aspect, there is provided the apparatus of any of the sixth to fourteenth aspects, wherein the information indicating the energy production capability comprises a metric indicating net surplus heat produced by the one or more network elements.

According to a sixteenth aspect, there is provided the apparatus of any of the first or sixth to fifteenth aspects, wherein the apparatus comprises a network function of the core network, or a real-time radio access network intelligent controller, or a non-real-time radio access network intelligent controller.

According to a seventeenth aspect, there is provided a network element of a radio access network or a core network, the network element comprising at least one processor, and at least one memory storing instructions that, when executed by the at least one processor, cause the network element at least to: transmit, to a network function, information indicating an energy production capability of the network element; receive, from the network function, information indicating one or more policies for optimizing at least one of energy consumption or carbon dioxide emissions of the network element, wherein the one or more policies are based at least on the information indicating the energy production capability, and an energy demand level of one or more consumers of energy produced by the network element; and apply the one or more policies.

According to an eighteenth aspect, there is provided a method performed by a network element of a radio access network or a core network, the method comprising: transmitting, to a network function, information indicating an energy production capability of the network element; receiving, from the network function, information indicating one or more policies for optimizing at least one of energy consumption or carbon dioxide emissions of the network element, wherein the one or more policies are based at least on the information indicating the energy production capability, and an energy demand level of one or more consumers of energy produced by the network element; and applying the one or more policies.

According to a nineteenth aspect, there is provided a computer program comprising instructions which, when executed by a network element of a radio access network or a core network, cause the network element to perform at least the following: transmitting, to a network function, information indicating an energy production capability of the network element; receiving, from the network function, information indicating one or more policies for optimizing at least one of energy consumption or carbon dioxide emissions of the network element, wherein the one or more policies are based at least on the information indicating the energy production capability, and an energy demand level of one or more consumers of energy produced by the network element; and applying the one or more policies.

According to a twentieth aspect, there is provided a computer readable medium comprising program instructions which, when executed by a network element of a radio access network or a core network, cause the network element to perform at least the following: transmitting, to a network function, information indicating an energy production capability of the network element; receiving, from the network function, information indicating one or more policies for optimizing at least one of energy consumption or carbon dioxide emissions of the network element, wherein the one or more policies are based at least on the information indicating the energy production capability, and an energy demand level of one or more consumers of energy produced by the network element; and applying the one or more policies.

According to a twenty-first aspect, there is provided a non-transitory computer readable medium comprising program instructions which, when executed by a network element of a radio access network or a core network, cause the network element to perform at least the following: transmitting, to a network function, information indicating an energy production capability of the network element; receiving, from the network function, information indicating one or more policies for optimizing at least one of energy consumption or carbon dioxide emissions of the network element, wherein the one or more policies are based at least on the information indicating the energy production capability, and an energy demand level of one or more consumers of energy produced by the network element; and applying the one or more policies.

According to a twenty-second aspect, there is provided a network element of a radio access network or a core network, the network element comprising: means for transmitting, to a network function, information indicating an energy production capability of the network element; means for receiving, from the network function, information indicating one or more policies for optimizing at least one of energy consumption or carbon dioxide emissions of the network element, wherein the one or more policies are based at least on the information indicating the energy production capability, and an energy demand level of one or more consumers of energy produced by the network element; and means for applying the one or more policies.

According to a twenty-third aspect, there is provided the network element of the twenty-second aspect, wherein the one or more policies comprise at least one or more uplink and downlink load management patterns and one or more target power consumption levels, wherein the network element further comprises: means for obtaining statistics related to compliance with the one or more uplink and downlink load management patterns; and means for transmitting, to the network function, statistics related to compliance with the one or more uplink and downlink load management patterns.

According to a twenty-fourth aspect, there is provided the network element of any of the twenty-second to twenty-third aspects, wherein the one or more policies indicate one or more requirements for energy consumption that should or should not be exceeded for a period of time; wherein the network element further comprises: means for obtaining statistics related to compliance with the one or more policies, wherein the statistics comprise metrics indicative of energy consumed by the network element relative to the one or more requirements; and means for transmitting the statistics to the network function.

According to a twenty-fifth aspect, there is provided the network element of any of the twenty-second to twenty-fourth aspects, wherein the energy production capability of the network element is based on waste heat generated by the network element, and wherein the one or more consumers comprise one or more heat consumers of the waste heat generated by the network element.

According to a twenty-sixth aspect, there is provided the network element of any of the twenty-second to twenty-fifth aspects, further comprising: means for receiving, from the network function, an indication indicating an energy need threshold above which energy from the network element is not needed by the one or more consumers; and means for adjusting energy transfer from the network element towards the one or more consumers according to the energy need threshold.

BRIEF DESCRIPTION OF THE DRAWINGS

In the following, various example embodiments will be described in greater detail with reference to the accompanying drawings, in which

FIG. 1 illustrates an example of a wireless communication network;

FIG. 2 illustrates joint energy and emission costs of running a radio access network node;

FIG. 3 illustrates an example of a system;

FIG. 4 illustrates an example of a system;

FIG. 5 illustrates a signal flow diagram;

FIG. 6 illustrates a flow chart;

FIG. 7 illustrates a flow chart;

FIG. 8 illustrates a flow chart;

FIG. 9 illustrates a flow chart;

FIG. 10 illustrates an example of an apparatus; and

FIG. 11 illustrates an example of an apparatus.

DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

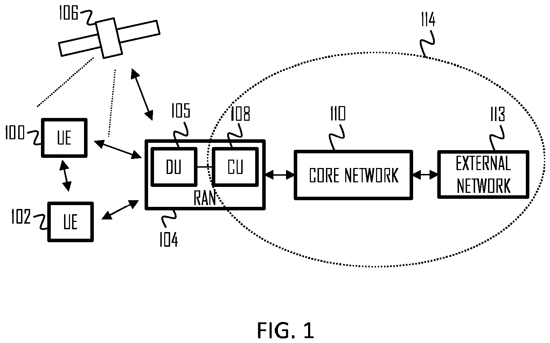

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, or a RAN node. In this description, the terms "access node", "RAN node", and "base station" may be used interchangeably.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and receiving control plane signaling and also for routing data from one access node to another access node.

The access node 104 may further be connected to a core network (CN) 110. The core network 110 may comprise an evolved packet core (EPC) network and/or a 5th generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

RAN nodes (base stations) 104 are the most power-hungry part of a wireless communication network. For example, power amplifiers are used in RAN nodes to boost the signal strength before transmission, but a substantial portion (e.g., up to 80 %) of the electrical power consumed by power amplifiers is converted into heat rather than useful signal power. Thus, power amplifiers are one of the most significant sources of waste heat in RAN nodes.

However, there are some solutions, such as liquid cooling base stations, which can utilize this waste heat for other purposes, such as residential heating. This helps to reduce energy waste and make the overall system more energy efficient.

Collecting waste heat for productive use (e.g., residential heating) is efficient from an energy viewpoint, but it also introduces a complex dynamic of expectations. As the consumers of that thermal energy get accustomed to cheap heat, they may also start to take it for granted. For example, in winter, when outdoor temperatures are below 0 degrees Celsius, the consumers demand their share of much-needed heat. However, to generate more waste heat, the base stations need to consume more energy, and most mobile network operators (MNOs) will not accept having to pay higher electricity bills unless a heat supply contract is in place. Furthermore, MNOs currently have an incentive to consume less energy, not more.

Current approaches to managing energy consumption in RAN nodes focus primarily on increasing energy efficiency, but overlook the impact of dynamic energy costs and carbon dioxide equivalent (CO2e) emissions, as well as trade-offs between energy consumption and waste heat generation. This disregard is the result of a lack of communication between the heat-producing RAN nodes and potential consumers of this heat. Some example embodiments specify standard interfaces to enable such information exchange, thus facilitating an optimal operation point from an economic and environmental viewpoint.

The concept of virtual power plant (VPP) has been introduced to address time-varying energy costs and demand, but it fails to account for waste heat reuse opportunities for the reduction of carbon dioxide emissions. VPP solutions are based on back-up battery units installed at the cell sites (e.g., employing battery capacity when the electricity price is high, and recharging the batteries when the electricity price is low). VPP solutions strive to balance the power demand on the electrical grid, avoid peak tariffs, etc. However, this is a power-supply solution only, and the RAN is largely unaware of its energy source or the best timings to prioritize traffic based on electricity peak tariffs.

To effectively address these issues, there is a need for a comprehensive energy management strategy that considers fluctuating energy prices, energy harvesting opportunities, CO2e emissions and taxation, when optimizing energy consumption across RAN nodes and clusters of RAN nodes. Such an approach would provide a more holistic view of energy usage and help reduce the environmental footprint of RAN operations.

Despite being counterintuitive, energy harvesting techniques like liquid cooling suggest that reduced energy consumption does not necessarily lead to lower emissions. For example, in RAN nodes powered by renewable energy, reducing the energy consumption may result in losing an opportunity to reuse the waste heat and reduce emissions elsewhere. Quantifying how much more power is worth consuming, and how much emissions can be reduced over time, is a dynamic optimization problem. Extra power consumption may also carry additional costs, which MNOs may not be willing to bear.

In addition to energy costs, future legal frameworks may impose high CO2e taxes onto MNOs. If this happens, emission costs will fluctuate depending on mobile traffic load, as well as waste heat supply and demand. Today, this is not factored in by energy consumption solutions.

It is desirable to minimize the joint costs of electricity and carbon taxation, while matching coverage and capacity of the RAN nodes. This is a challenging technical problem because of dynamic factors, such as the heat demand and supply, as well as the energy costs and the RAN service needs. Furthermore, nearby RAN nodes may have different service requirements that may require different power operating points. Thus, such operating points are moving targets.

However, waste heat reuse also creates opportunities for relaxing energy efficiency constraints at the RAN node, at least during peak hours, when heat production is likely to be high. Managing these network-wide requirements (capacity, coverage, energy efficiency, heat supply, heat demand, electricity costs, emissions, taxation) centrally is a challenge for maintaining network performance, while minimizing emissions and costs (e.g., in future green networks).

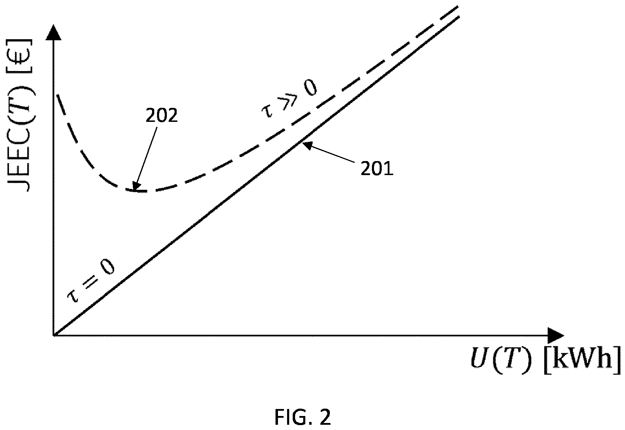

FIG. 2 illustrates Joint Energy and Emission Costs (JEEC) of running a RAN node 104 with various values of the carbon tax ($\tau$). Without a carbon tax ($\tau = 0$), energy consumption increases costs linearly, as shown by the line 201. However, as shown by the curve 202, a high carbon tax ($\tau \gg 0$) combined with waste heat reuse may lower costs by using waste heat to offset the emissions, but only up to the point where heat supply equals demand. After that, costs rise again.

The carbon dioxide emissions of a RAN node 104 may be modelled, for example, as:

$$E(T) = I \cdot U(T) - K \cdot \int_0^T \min\big(H_s(t), H_D(t)\big)\, dt$$

where $P(t)$ is the power consumption of the RAN node 104 at time $t$ (e.g., 2.5 kW for a 5G base station), $U(T) = \int_0^T P(t)\, dt$ is the net energy consumed by the RAN node 104 during a period $T$ (e.g., measured in kWh), $I$ is the carbon emission intensity of electricity production, $K$ is the carbon emission intensity of the consumers (e.g., measured in gCO2e/kWh), $H_s(t) = f(P(t))$ is the surplus heat (waste heat) supplied by the RAN node 104 at time $t$ (e.g., measured in kilowatts), and $H_D(t)$ is the energy demand of the consumers at time $t$ (e.g., measured in kilowatts).

In addition, the net Joint Energy and Emission Costs (JEEC) of a RAN node 104 during a period T may be modelled as:

$$JEEC(T) = E(T) \cdot \tau + \int_0^T C(t) \cdot U(t)\, dt$$

where $\tau$ is the carbon tax, and $C(t)$ is the dynamic price of electricity for non-household consumers (e.g., per kilowatt).

These relationships between power and carbon emission costs are illustrated in FIG. 2. This shows that higher carbon taxes and heat reuse technology can lead to an optimum point where the running costs are minimized, even if the RAN node 104 consumes some power.

Some example embodiments enable to operate one or more RAN nodes 104 at a power level at or close to this optimum point, while also making sure that coverage and capacity requirements are met.

Some example embodiments provide a method for a managing entity to control the power consumption and energy production (e.g., waste heat generation) of one or more RAN nodes 104, and to control how the produced energy (e.g., waste heat) is distributed to one or more consumers. Furthermore, by recognizing the imbalances in traffic load and energy demand across multiple RAN nodes, the managing entity may minimize the joint costs and emissions in a multi-site manner.

Some example embodiments enable the optimization of key performance indicators (KPIs) that are more relevant in deployments with high carbon taxation and electricity grids with large shares of renewable energy supply. For example, in some embodiments, the managing entity may balance a cluster of RAN nodes to minimize their joint carbon dioxide emissions $E(T)$ as defined above. In other embodiments, the network operator can focus on optimizing the joint energy and emissions cost $JEEC(T)$. The managing entity may enable such optimization via (but not limited to) the following means.

Firstly, the managing entity may provide traffic load balancing policies, shifting mobile traffic load to cells that leverage the RAN surplus heat, because (i) there is a possibility to do so with liquid cooling, and/or (ii) there is a higher demand of heat in the current period. This may enable sophisticated traffic load balancing between liquid-cooled and air-cooled cell sites, such that heat supply is optimally leveraged.

Secondly, the managing entity may enable multi-node heat aggregation and distribution to leverage the heat produced at multiple cell sites and guarantee that the heat demand is met when and where needed.

Thirdly, being aware of the heat produced by the RAN nodes 104 (and of the applicable carbon taxes), the managing entity can decide whether to draw and combine heat from the RAN or other sources, like internal combustion chambers, teleheating, etc.

Similarly, the managing entity can also decide dynamically whether to diversify the energy sources that are used to provide energy to the consumers, based on the energy sources that the managing entity is aware of. For example, the managing entity may be aware of energy sources such as heat pumps, emergency generators, batteries, solar panels co-located with the RAN node(s) 104, etc. The managing entity may manage the energy produced by the RAN node(s) 104, and the transfer of that energy to the consumers.

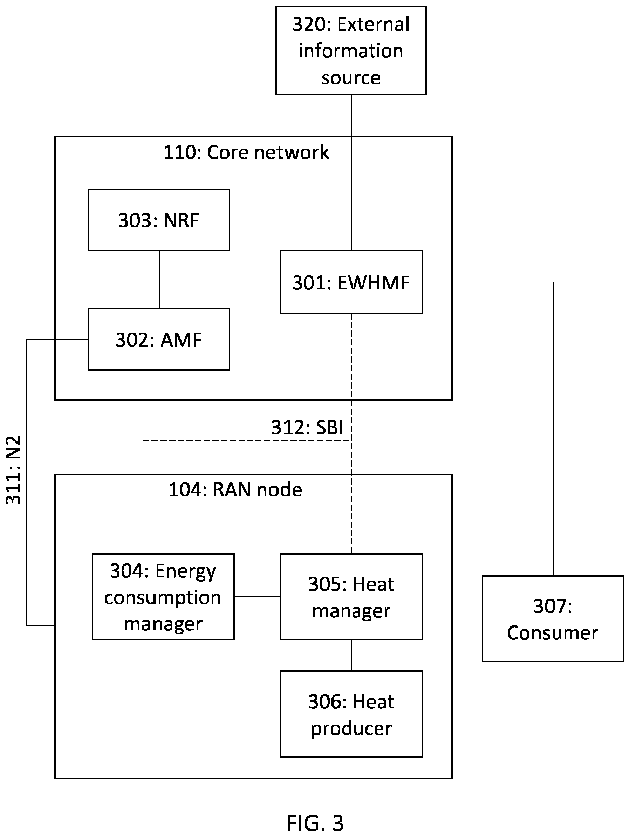

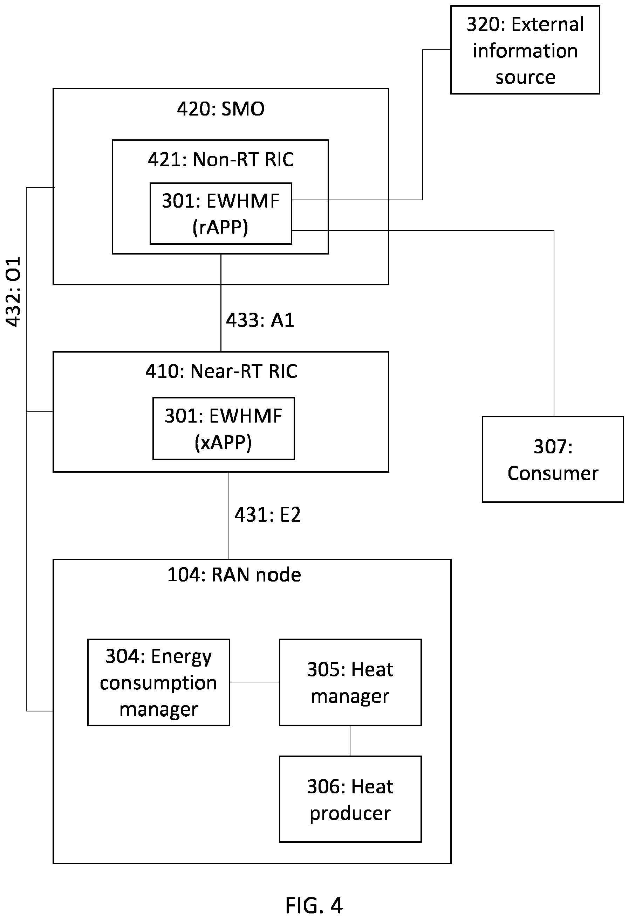

FIG. 3 and FIG. 4 illustrate an example of a system, to which some example embodiments may be applied. FIG. 3 and FIG. 4 may be understood to depict a part of the wireless communication network of FIG. 1, but with greater accuracy with respect to controlling the energy consumption and/or carbon dioxide emissions of one or more RAN nodes 104.

The system comprises a logical managing entity called the energy and waste heat management function (EWHMF) 301. The EWHMF 301 may have at least one or all of the following responsibilities: energy demand management, residual heat supply management, heat demand management, balancing of heat production and power consumption, monitoring of carbon dioxide emissions, and/or monitoring of energy costs.

The EWHMF 301 may receive information on energy costs, heat supply and demand patterns, and cluster traffic patterns exposed by one or more RAN nodes 104 or one or more entities 320 external to the cluster of RAN nodes. The EWHMF 301 may determine recommended policies for the joint optimization of energy consumption and/or carbon dioxide emissions in the cluster of RAN nodes. The EWHMF 301 may transmit, to one or more RAN nodes 104, information and/or patterns on recommended energy consumption and/or energy production (e.g., waste heat generation).

It should be noted that RAN nodes are used only as an example herein, and any other network elements (e.g., core network functions) where waste heat production and management are feasible may also be used instead of or in addition to RAN nodes.

The EWHMF 301 may provide traffic-related and possibly power-related policies to one or more RAN nodes 104, and/or to other network elements in the RAN or even in the core network 110, e.g., a distributed user plane function (UPF) or a centralized core network location.

The main benefits of using the EWHMF 301 are: global (multi-site) reduction of carbon dioxide emissions (of RAN and/or non-RAN nodes) due to centralized control of residual heat losses; cost reduction considering carbon taxes; less stringent energy efficiency requirements for radio equipment; and efficient power and heat management in cases where the available power supply is limited or inconsistent (e.g., at a solar-powered cell site).

One or more consumers (e.g., heat consumers) 307 are also part of this framework. The one or more consumers 307 refer to devices or systems that use heat and have communication capabilities for communicating with the EWHMF 301. For example, the one or more consumers 307 may comprise (but are not limited to) at least one of: a hot water system, a residential heating system, or an industrial process requiring heat. The one or more consumers 307 may have a direct interface to the EWHMF 301. This enables the EWHMF 301 to make aggregated energy management decisions about energy distribution (e.g., heat distribution) affecting multiple consumers 307 simultaneously.

The energy consumption manager 304 is a software or hardware entity in the RAN node 104. The energy consumption manager 304 is configured to monitor energy consumption at the RAN node 104 and to report this information to the EWHMF 301. The energy consumption manager 304 may also receive concrete energy consumption targets from the EWHMF 301, which the energy consumption manager 304 may have to respect by constraining or relaxing what the RAN node 104 can do.

The heat manager 305 is a software or hardware entity in the RAN node 104. The heat manager 305 is configured to monitor or measure the amount of heat produced by the RAN node 104 and to report it to the EWHMF 301. The heat manager 305 may also receive requests from the EWHMF 301 asking for more (or less) heat, or for specific heat production profiles, which could later be sent to the one or more consumers 307.

The heat producer 306 is a hardware part of the RAN node 104 that produces heat. For example, the heat producer 306 may comprise a heat sink or a liquid coolant flowing through a pipe.

In the example of FIG. 3, the EWHMF 301 is implemented as a network function of the core network 110, where it can provide policies beyond the RAN. From a RAN node 104, the needed information can be provided to the EWHMF 301 via at least one of: the N2 interface 311 (i.e., the AMF 302 may act as a middleman between the EWHMF 301 and the RAN node 104), or via the adoption of a service-based interface (SBI) 312 between the EWHMF 301 and the RAN node(s) 104 it manages. The SBI 312 may be beneficial for reducing control plane overhead.

The core network 110 may comprise a network repository function (NRF) 303 that acts as a central repository of network functions within the core network 110. The NRF 303 facilitates the discovery and registration of these functions, allowing different components of the core network 110 to find and communicate with each other effectively. In the example of FIG. 4, the EWHMF 301 is implemented in a system based on the open radio access network (O-RAN) architecture. For example, the EWHMF 301 may be instantiated as an xAPP within a near-real-time RAN intelligent controller (near-RT RIC) 410, and/or as an rApp within a non-real-time RAN intelligent controller (non-RT RIC) 421.

An rApp is a software application designed to run on the non-RT RIC 421. An xApp is a software application designed to run on the near-RT RIC 410.

The non-RT RIC 421 is located within a network management entity called service management and orchestration (SMO) 420. The SMO 420 may be connected to the RAN network functions, including the near-RT RIC 410, via an O1 interface 432.

The non-RT RIC 421 (which resides in the SMO 420) performs non-real-time operations. The non-RT RIC 421 may communicate with the near-RT RIC 410 through the O1 interface 432 and/or the A1 interface 433. The non-RT RIC 421 may be used to control the near-RT RIC 410. For example, the non-RT RIC 421 may modify the near-RT RIC platform 410 and/or the internal applications (xApps) of the near-RT RIC 410. Furthermore, the non-RT RIC 421 may monitor, analyze and provide feedback on the state of the near-RT RIC 410, provide enrichment information, and/or facilitate, train and distribute machine learning models for the previously mentioned tasks.

The near-RT RIC 410 may communicate with one or more RAN nodes (E2 nodes) 104 through the E2 interface 431 for time-sensitive near-real-time management and control of radio resources, such as interference management, handover management, Quality of Service (QoS) management, and radio connection management.

An E2 node may be defined as a logical node terminating the E2 interface 431 interfacing with the near-RT RIC 410. An E2 node may comprise or execute one or more RAN functions. For example, an E2 node may comprise at least one of: an O-RAN central unit control plane (O-CU-CP), an O-RAN central unit user plane (O-CU-UP), an O-RAN distributed unit (O-DU), and/or an O-RAN eNB (O-eNB). Although only one E2 node 104 is shown in FIG. 4, it should be noted there may also be more than one E2 node connected to the near-RT RIC 410.

The near-RT RIC 410 may host one or more xApps (e.g., the EWHMF xAPP 301) and common framework platform functions to support and be used by the one or more xApps.

A given xAPP may control some RAN function(s) or a part of it. The xApps can also exchange information between them, enabling to build sophisticated use cases leveraging the capabilities of the multiple xApps. An xApp may comprise a descriptor and a software package. The descriptor provides metadata on the xApp related to its version, provider, software package location, management information regarding fault, configuration, accounting, performance and security (FCAPS), and the data types that it takes as input as well as the data types that it produces as output. The software package implements the logic that collects RAN-related information coming from the E2 node(s) and provides optimized and intelligent RAN control decisions.

In another embodiment (different from the embodiments of FIG. 3 and FIG. 4), the EWHMF 301 may be a standalone proprietary solution deployed in a location to be chosen by the network operator. This embodiment may use similar proprietary interfaces as FIG. 3 towards the RAN node(s) 104, consumer(s) 307, external information source 320 and, optionally, the core network 110.

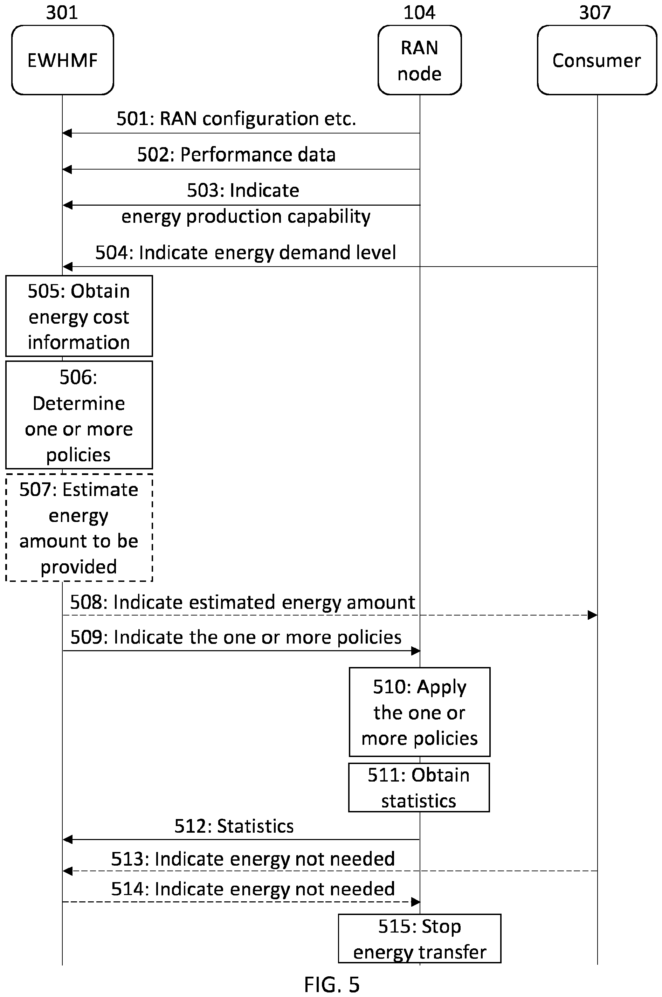

FIG. 5 illustrates a signal flow diagram according to an example embodiment.

Although only one RAN node 104 is shown in FIG. 5, it should be noted that the number of RAN nodes may also be more than one. In other words, there may be one or more RAN nodes. In addition, the signaling procedure illustrated in FIG. 5 may be extended and applied according to the actual number of RAN nodes.

Similarly, although only one consumer 307 is shown in FIG. 5, it should be noted that the number of consumers may also be more than one. In other words, there may be one or more consumers. In addition, the signaling procedure illustrated in FIG. 5 may be extended and applied according to the actual number of consumers.

Furthermore, it should be noted that, in addition or as an alternative to the RAN node(s) 104, the signaling procedure illustrated in FIG. 5 may be applied to any other network elements (e.g., core network functions) with energy production capabilities and for which the produced energy can be consumed by the one or more consumers 307.

Referring to FIG. 5, at 501, one or more network elements 104 of a radio access network, transmit, to a network function (e.g., the EWHMF 301), configuration and capability information of the one or more network elements 104. The network function 301 receives the configuration and capability information. The capability information provided here may comprise, for example, a dynamic range in terms of power for transmission, supported MIMO configurations (e.g., subpanel activation/deactivation, beamforming modes etc.). The configuration information may provide details on site location, azimuth and tilt of antennas, and possibly cost of energy at the one or more network elements 104.

At 502, the one or more network elements 104 transmit performance information of the one or more network elements 104 to the network function 301. The network function 301 receives the performance information. For example, the performance information may comprise traffic load in uplink and downlink, energy consumption, sleep periods and their duration, types of traffic served, etc. This performance information may be provided periodically and/or event-based (e.g., based on sudden changes of traffic patterns).

At 503, the one or more network elements 104 transmit, to the network function 301, information indicating an energy production capability of the one or more network elements 104. The network function 301 receives the information.

For example, the energy production capability of the one or more network elements 104 may be based on waste heat generated by the one or more network elements, and the one or more consumers 307 may comprise one or more heat consumers of the waste heat generated by the one or more network elements 104. In other words, the energy produced by the one or more network elements 104 may refer to thermal energy.

The information indicating the energy production capability may comprise, for example, a metric indicating net surplus heat (or net waste heat) produced by the one or more network elements 104. The surplus heat (or waste heat) generated by the one or more network elements 104 may provide energy savings to the one or more consumers 307 (although there may be some heat losses during the transportation of the heat from the one or more network elements 104 to the one or more consumers 307). Thus, the metric indicating the net surplus heat (or net waste heat) may represent the corresponding amount of energy saved by the one or more consumers 307, or a difference or a ratio between the energy saved and the surplus heat (waste heat) generated, or any combination of these.

At 504, the network function 301 receives, from the one or more consumers 307, information indicating an energy demand level of the one or more consumers 307. The information may also indicate a time window or duration when the energy is needed.

At 505, the network function 301 may obtain, for example from an external information source 320 (e.g., the internet) or from the one or more network elements 104, information indicating a cost of energy consumed by the one or more network elements 104. For example, the network function 301 may obtain a daily cost of energy at the location of each network element of the one or more network elements 104.

At 506, the network function 301 determines one or more policies for optimizing at least one of energy consumption and/or carbon dioxide emissions of the one or more network elements 104. Herein the one or more policies may refer to radio resource management (RRM) policies. For example, the network function 301 may determine one policy per network element of the one or more network elements 104. The determination is based at least on the information indicating the energy production capability, and the energy demand level of the one or more consumers 307 of the energy produced by the one or more network elements 104.

For example, if an antenna muting energy savings feature is used at the one or more network elements 104, at 506 the network function 301 may decide to relax (i.e., decrease) the number of antenna elements to mute, thus increasing the energy consumption and waste heat production of the one or more network elements 104. The network function 301 may do this carefully so that the inflection point 202 shown in FIG. 2 is reached. To achieve this level of precision, the accurate monitoring of energy consumption and heat produced, as reported by the energy consumption manager 304 and the heat manager 305, respectively, may be necessary.

The determination may be based further on the cost of energy consumed by the one or more network elements 104. The cost of energy may be used as an indicator of the load or stability of the electricity grid. For example, when the energy cost is high (e.g., above an energy cost threshold), it may be beneficial to produce as much energy as possible from the one or more network elements 104 to the one or more consumers 307 in order to support the stability of the electricity grid (i.e., in order to avoid overloading the electricity grid).

The determination may be assisted by one or more artificial intelligence or machine learning techniques to ensure optimal operating points for future predicted traffic patterns and energy demands from the one or more consumers 307 demanding the energy.

The one or more policies may comprise at least one or more uplink and downlink load management patterns per cell, and one or more target power consumption levels for the one or more network elements 104 (e.g., one target power consumption level per network element of the one or more network elements 104). Herein the one or more uplink and downlink load management patterns may refer to a pattern of UL and DL resource usage suggested by the network function 301 to meet the one or more policies. For example, the resource usage may be based on slot occupancy (in time of frequency domain) and/or power and antenna adaptations.

Alternatively, or additionally, the one or more policies may indicate one or more requirements (e.g., one or more energy consumption thresholds) for energy consumption that should or should not be exceeded by the one or more network elements 104 for a certain period of time (e.g., during pre-determined traffic periods).

At 507, the network function 301 may optionally estimate, based on the one or more policies, an amount of energy to be provided to the one or more consumers 307 from the one or more network elements 104.

At 508, the network function 301 may optionally transmit, to the one or more consumers 307, information indicating the estimated amount of energy to be provided. For example, the network function 301 may provide the one or more consumers 307 with information on the estimated amount of energy (e.g., heat) that will be provided and its time duration.

At 509, the network function 301 transmits, to the one or more network elements 104, information indicating the one or more policies. The one or more network elements 104 receive the information.

At 510, the one or more network elements 104 apply the one or more policies. The one or more network element 104 should adhere to the one or more policies on a best effort basis (i.e., try to apply the one or more policies to the extent possible) to minimize end user impact.

At 511, the one or more network elements 104 obtain or collect statistics related to compliance with the one or more policies and/or with the one or more uplink and downlink load management patterns. For example, the statistics may comprise metrics indicative of energy consumed by the one or more network elements 104 relative to the one or more requirements for the energy consumption.

At 512, the one or more network elements 104 transmit, to the network function 301, the statistics related to the compliance with the one or more policies and/or with the one or more uplink and downlink load management patterns. The network function 301 receives the statistics. The network function 301 may utilize the statistics for determining one or more further policies for optimizing the at least one of the energy consumption and/or the carbon dioxide emissions of the one or more network elements 104.

For example, the statistics may be used to dynamically correct the one or more policies determined at 506. For example, the network function 301 may decide, based on the statistics, to increase or decrease the number of antenna elements to mute at the one or more network elements 104, if the joint energy and emission costs suffers regrowth.

At 513, the network function 301 may optionally receive, from the one or more consumers 307, an indication indicating an energy need threshold above which energy from the one or more network elements 104 is not needed.

For example, if the energy need threshold is zero, then the indication may indicate that no energy from the one or more network elements 104 is needed (e.g., that the one or more consumers 307 no longer require heat based on their updated energy demand level).

At 514, based on receiving the indication from the one or more consumers 307, the network function 301 may transmit an indication to the heat manager 305 of the one or more network elements 104 to indicate the energy need threshold above which energy from the one or more network elements 104 is not needed by the one or more consumers 307.

For example, if the energy need threshold is zero, then the indication may indicate that no energy (e.g., heat) from the one or more network elements 104 is needed.

Based on receiving the indication, the network function 301 may also modify the one or more policies according to criteria other than JEEC minimization (e.g., according to maximization of radio performance).

At 515, based on receiving the indication from the network function 301, the heat manager 305 may adjust the energy transfer (e.g., heat transfer) from the one or more network elements 104 towards the one or consumers 307 according to the energy need threshold. For example, if the energy need threshold is zero, then the heat manager 305 may stop transferring energy (e.g., heat) from the one or more network elements 104 towards the one or more consumers 307 (e.g., by closing a valve).

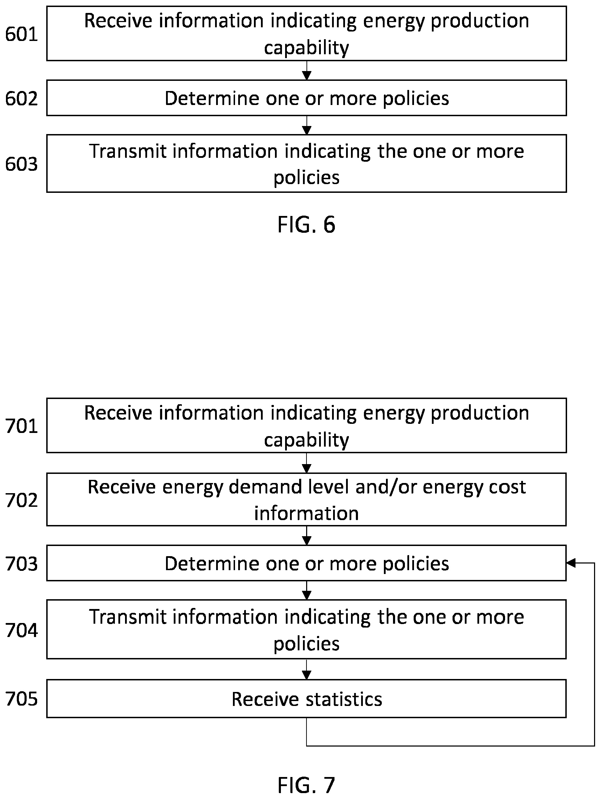

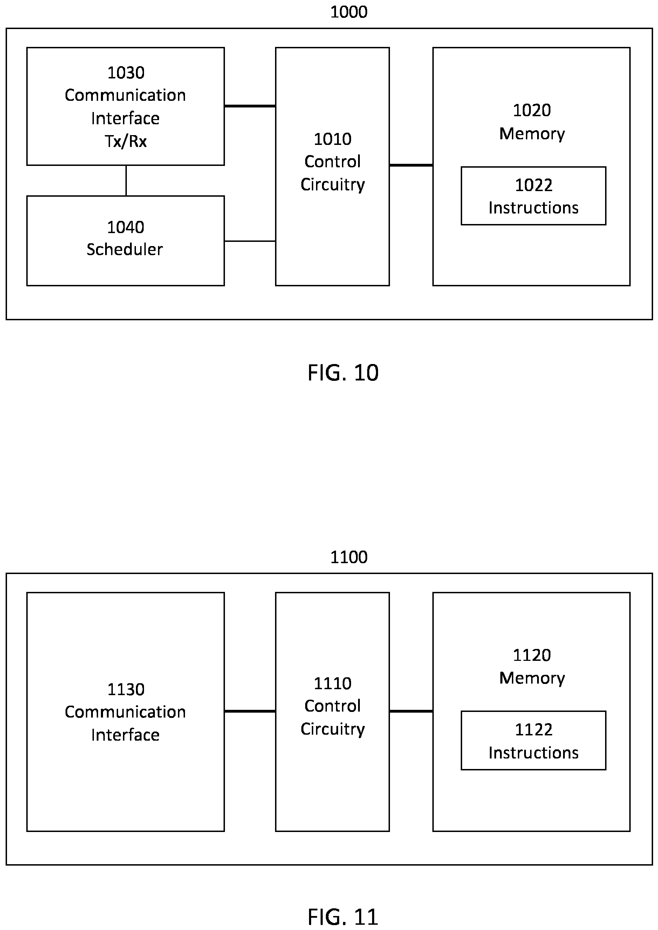

FIG. 6 illustrates a flow chart according to an example embodiment of a method for optimizing energy consumption and/or carbon dioxide emissions of one or more network elements of a radio access network or a core network. The method of FIG. 6 may be performed by an apparatus 1100 depicted in FIG. 11. For example, the apparatus 1100 may be, or comprise, or be comprised in, a network function (e.g., the EWHMF 301) of the core network 110. As another example, the apparatus 1100 may be, or comprise, or be comprised in, a near-real-time radio access network intelligent controller 410, or a non-real-time radio access network intelligent controller 421.

Referring to FIG. 6, in block 601, the apparatus 1100 receives, from one or more network elements 104 of a radio access network or a core network 110 (e.g., UPF), information indicating an energy production capability of the one or more network elements 104. In other words, the one or more network elements 104 may be part of the radio access network, or the one or more network elements may be part of the core network 110.

For example, the information indicating the energy production capability may comprise a metric indicating net surplus heat produced by the one or more network elements 104.

In block 602, the apparatus 1100 determines one or more policies for optimizing at least one of energy consumption or carbon dioxide emissions of the one or more network elements 104, wherein the determination is based at least on the information indicating the energy production capability, and an energy demand level of one or more consumers 307 of energy produced by the one or more network elements 104.

For example, the apparatus 1100 may determine one or more policies for optimizing the energy consumption of the one or more network elements 104.

As another example, the apparatus 1100 may determine one or more policies for optimizing the carbon dioxide emissions of the one or more network elements 104.

As another example, the apparatus 1100 may determine one or more policies for optimizing both the energy consumption and the carbon dioxide emissions of the one or more network elements 104.

The determination may be based further on a cost of energy consumed by the one or more network elements 104.

In block 603, the apparatus 1100 transmits, to the one or more network elements 104, information indicating the one or more policies.

For example, the energy production capability of the one or more network elements 104 may be based on waste heat generated by the one or more network elements 104, and the one or more consumers 307 may comprise one or more heat consumers of the waste heat generated by the one or more network elements 104.

For example, the one or more policies may comprise at least one or more uplink and downlink load management patterns and one or more target power consumption levels.

Alternatively, or additionally, the one or more policies may indicate one or more requirements for energy consumption that should or should not be exceeded for a period of time.

The apparatus 1100 may estimate, based on the one or more policies, an amount of energy to be provided to the one or more consumers 307 from the one or more network elements 104; and transmit, to the one or more consumers 307, information indicating the estimated amount of energy to be provided.

The apparatus 1100 may receive, from the one or more consumers 307, an indication indicating an energy need threshold above which energy from the one or more network elements 104 is not needed; and transmit, to the one or more network elements 104, an indication indicating the energy need threshold above which energy from the one or more network elements 104 is not needed by the one or more consumers 307.

The apparatus 1100 may receive, from the one or more consumers 307, an indication indicating that the energy from the one or more network elements 104 is not needed; and transmit, to the one or more network elements 104, an indication indicating that the energy from the one or more network elements 104 is not needed by the one or more consumers 307.

FIG. 7 illustrates a flow chart according to an example embodiment of a method for optimizing energy consumption and/or carbon dioxide emissions of one or more network elements of a radio access network or a core network. The method of FIG. 6 may be performed by an apparatus 1100 depicted in FIG. 11. For example, the apparatus 1100 may be, or comprise, or be comprised in, a network function (e.g., the EWHMF 301) of the core network 110. As another example, the apparatus 1100 may be, or comprise, or be comprised in, a near-real-time radio access network intelligent controller 410, or a non-real-time radio access network intelligent controller 421.

Referring to FIG. 7, in block 701, the apparatus 1100 receives, from one or more network elements 104 of a radio access network or a core network 110 (e.g., UPF), information indicating an energy production capability of the one or more network elements 104.

For example, the information indicating the energy production capability may comprise a metric indicating net surplus heat produced by the one or more network elements 104.

In block 702, the apparatus 1100 receives information indicating at least one of: an energy demand level of one or more consumers 307 of energy produced by the one or more network elements 104, or a cost of energy consumed by the one or more network elements 104.

For example, the energy production capability of the one or more network elements 104 may be based on waste heat generated by the one or more network elements 104, and the one or more consumers 307 may comprise one or more heat consumers of the waste heat generated by the one or more network elements 104.

In block 703, the apparatus 1100 determines one or more policies for optimizing at least one of energy consumption or carbon dioxide emissions of the one or more network elements 104, wherein the determination is based at least on the information indicating the energy production capability, and the energy demand level of the one or more consumers 307 of the energy produced by the one or more network elements 104.

The determination may be based further on the cost of energy consumed by the one or more network elements 104.

In block 704, the apparatus 1100 transmits, to the one or more network elements 104, information indicating the one or more policies.

For example, the one or more policies may comprise at least one or more uplink and downlink load management patterns and one or more target power consumption levels.

Alternatively, or additionally, the one or more policies may indicate one or more requirements for energy consumption that should or should not be exceeded for a period of time.

In block 705, the apparatus 1100 receives, from the one or more network elements 104, at least one of: statistics related to compliance with the one or more uplink and downlink load management patterns, or statistics related to compliance with the one or more policies. The latter statistics may comprise metrics indicative of energy consumed by the one or more network elements 104 relative to the one or more requirements.

Following block 705, the method may return to block 703 and continue from there. In other words, the apparatus 1100 may determine, based at least one the statistics, one or more further policies for optimizing the at least one of the energy consumption or the carbon dioxide emissions of the one or more network elements 104; and transmit the one or more further policies to the one or more network elements 104.

The apparatus 1100 may estimate, based on the one or more policies, an amount of energy to be provided to the one or more consumers 307 from the one or more network elements 104; and transmit, to the one or more consumers 307, information indicating the estimated amount of energy to be provided.

The apparatus 1100 may receive, from the one or more consumers 307, an indication indicating an energy need threshold above which energy from the one or more network elements 104 is not needed; and transmit, to the one or more network elements 104, an indication indicating the energy need threshold above which energy from the one or more network elements 104 is not needed by the one or more consumers 307.

The apparatus 1100 may receive, from the one or more consumers 307, an indication indicating that the energy from the one or more network elements 104 is not needed; and transmit, to the one or more network elements 104, an indication indicating that the energy from the one or more network elements 104 is not needed by the one or more consumers 307.

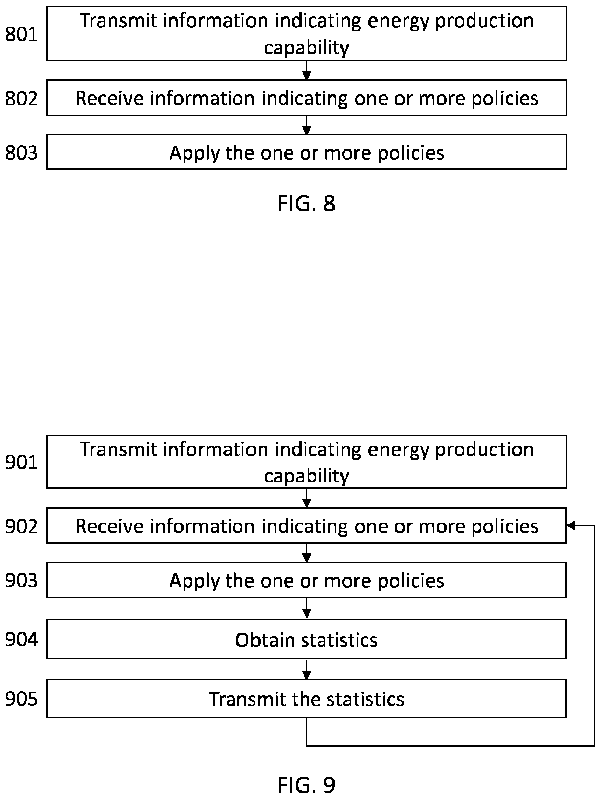

FIG. 8 illustrates a flow chart according to an example embodiment of a method for optimizing energy consumption and/or carbon dioxide emissions of one or more network elements of a radio access network or a core network. The method of FIG. 8 may be performed by an apparatus 1000 depicted in FIG. 10. For example, the apparatus 1000 may be, or comprise, or be comprised in, a network element of a radio access network (e.g., RAN node 104).

Referring to FIG. 8, in block 801, the apparatus 1000 (network element 104) transmits, to a network function 301 (e.g., the EWHMF), information indicating an energy production capability of the network element 104.

For example, the information indicating the energy production capability may comprise a metric indicating net surplus heat produced by the network element 104.

In block 802, the apparatus 1000 (network element 104) receives, from the network function 301, information indicating one or more policies for optimizing at least one of energy consumption or carbon dioxide emissions of the network element 104, wherein the one or more policies are based at least on the information indicating the energy production capability, and an energy demand level of one or more consumers 307 of energy produced by the network element 104.

For example, the energy production capability of the network element 104 may be based on waste heat generated by the network element 104, and the one or more consumers 307 may comprise one or more heat consumers of the waste heat generated by the network element 104.

In block 803, the apparatus 1000 (network element 104) applies the one or more policies.

For example, the one or more policies may comprise at least one or more uplink and downlink load management patterns and one or more target power consumption levels.

Alternatively, or additionally, the one or more policies may indicate one or more requirements for energy consumption that should or should not be exceeded for a period of time.

The apparatus 1000 may receive, from the network function 301, an indication indicating an energy need threshold above which energy from the network element 104 is not needed by the one or more consumers 307. The apparatus 1000 may adjust energy transfer from the network element 104 towards the one or more consumers 307 according to the energy need threshold.

The apparatus 1000 may receive, from the network function 301, an indication indicating that the energy from the network element 104 is not needed by the one or more consumers 307. Based on the indication that the energy is not needed, the apparatus 1000 may stop energy transfer from the network element 104 towards the one or more consumers 307.

FIG. 9 illustrates a flow chart according to an example embodiment of a method for optimizing energy consumption and/or carbon dioxide emissions of one or more network elements of a radio access network or a core network. The method of FIG. 9 may be performed by an apparatus 1000 depicted in FIG. 10. For example, the apparatus 1000 may be, or comprise, or be comprised in, a network element of a radio access network (e.g., RAN node 104).

Referring to FIG. 9, in block 901, the apparatus 1000 (network element 104) transmits, to a network function 301 (e.g., the EWHMF), information indicating an energy production capability of the network element 104.

For example, the information indicating the energy production capability may comprise a metric indicating net surplus heat produced by the network element 104.

In block 902, the apparatus 1000 (network element 104) receives, from the network function 301, information indicating one or more policies for optimizing at least one of energy consumption or carbon dioxide emissions of the network element 104, wherein the one or more policies are based at least on the information indicating the energy production capability, and an energy demand level of one or more consumers 307 of energy produced by the network element 104.

For example, the energy production capability of the network element 104 may be based on waste heat generated by the network element 104, and the one or more consumers 307 may comprise one or more heat consumers of the waste heat generated by the network element 104.

In block 903, the apparatus 1000 (network element 104) applies the one or more policies.

For example, the one or more policies may comprise at least one or more uplink and downlink load management patterns and one or more target power consumption levels.

Alternatively, or additionally, the one or more policies may indicate one or more requirements for energy consumption that should or should not be exceeded for a period of time.

In block 904, the apparatus 1000 (network element 104) obtains at least one of: statistics related to compliance with the one or more uplink and downlink load management patterns, or statistics related to compliance with the one or more policies. The latter statistics may comprise metrics indicative of energy consumed by the network element 104 relative to the one or more requirements.

In block 905, the apparatus 1000 (network element 104) transmits the obtained statistics to the network function 301.

Following block 905, the method may return to block 902 and continue from there. In other words, the apparatus 1000 (network element 104) may receive, from the network function 301, one or more further policies for optimizing the at least one of the energy consumption or the carbon dioxide emissions of the network element 104, wherein the one or more further policies are based at least on the transmitted statistics. The apparatus 1000 (network element 104) may apply the one or more further policies.

The blocks, related functions, and information exchanges (messages) described above by means of FIGS. 5 to 9 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 10 illustrates an example of an apparatus 1000 comprising means for performing one or more of the example embodiments described above. For example, the apparatus 1000 may be, or comprise, or be comprised in, a network element of a radio access network (e.g., RAN node 104) or a core network.

The apparatus 1000 may comprise, for example, a circuitry or a chipset applicable for realizing one or more of the example embodiments described above. The apparatus 1000 may be an electronic device comprising one or more electronic circuitries. The apparatus 1000 may comprise a communication control circuitry 1010 such as at least one processor, and at least one memory 1020 storing instructions 1022 which, when executed by the at least one processor, cause the apparatus 1000 to carry out one or more of the example embodiments described above. Such instructions 1022 may, for example, include computer program code (software). The at least one processor and the at least one memory storing the instructions may provide the means for providing or causing the performance of any of the methods and/or blocks described above.

The processor is coupled to the memory 1020. The processor is configured to read and write data to and from the memory 1020. The memory 1020 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1020 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1020 or, alternatively or additionally, they may be received, by the apparatus, via an electromagnetic carrier signal and/or may be copied from a physical entity such as a computer program product. Execution of the computer readable instructions causes the apparatus 1000 to perform one or more of the functionalities described above.

The memory 1020 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1000 may further comprise or be connected to a communication interface 1030, such as a radio unit, comprising hardware and/or software for realizing communication connectivity with one or more wireless communication devices according to one or more communication protocols. The communication interface 1030 comprises at least one transmitter (Tx) and at least one receiver (Rx) that may be integrated to the apparatus 1000 or that the apparatus 1000 may be connected to. The communication interface 1030 may provide means for performing some of the blocks and/or functions (e.g., transmitting and receiving) for one or more example embodiments described above. The communication interface 1030 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1030 provides the apparatus with radio communication capabilities to communicate in the wireless communication network. The communication interface 1030 may, for example, provide a radio, cable or fiber interface to a network function (e.g., the EWHMF 301).

The communication interface 1030 may further provide a radio interface to one or more UEs 100, 102. The apparatus 1000 may further comprise or be connected to another interface towards a core network 110, such as the network coordinator apparatus or AMF, and/or to the access nodes 104 of the wireless communication network.

The apparatus 1000 may further comprise a scheduler 1040 that is configured to allocate radio resources. The scheduler 1040 may be configured along with the communication control circuitry 1010 or it may be separately configured.

It is to be noted that the apparatus 1000 may further comprise various components not illustrated in FIG. 10. The various components may be hardware components and/or software components.

FIG. 11 illustrates an example of an apparatus 1100 comprising means for performing one or more of the example embodiments described above. For example, the apparatus 1100 may be, or comprise, or be comprised in, a network function (e.g., the EWHMF 301) of a core network 110. As another example, the apparatus 1100 may be, or comprise, or be comprised in, a near-real-time radio access network intelligent controller 410, or a non-real-time radio access network intelligent controller 421.

The apparatus 1100 may comprise, for example, a circuitry or a chipset applicable for realizing one or more of the example embodiments described above. The apparatus 1100 may be an electronic device or computing system comprising one or more electronic circuitries. The apparatus 1100 may comprise a control circuitry 1110 such as at least one processor, and at least one memory 1120 storing instructions 1122 which, when executed by the at least one processor, cause the apparatus 1100 to carry out one or more of the example embodiments described above. Such instructions 1122 may, for example, include computer program code (software). The at least one processor and the at least one memory storing the instructions may provide the means for providing or causing the performance of any of the methods and/or blocks described above.

In another embodiment, the means may be a network function of the core network 110, or the means may be network function virtualization infrastructure.

The processor is coupled to the memory 1120. The processor is configured to read and write data to and from the memory 1120. The memory 1120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1120 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1120 or, alternatively or additionally, they may be received, by the apparatus, via an electromagnetic carrier signal and/or may be copied from a physical entity such as a computer program product. Execution of the computer readable instructions causes the apparatus 1100 to perform one or more of the functionalities described above.

The memory 1120 may be implemented using any suitable data storage technology, such as semiconductor-based memory devices, flash memory, magnetic memory devices and systems, optical memory devices and systems, fixed memory and/or removable memory.

The apparatus 1100 may further comprise or be connected to a communication interface 1130 comprising hardware and/or software for realizing communication connectivity according to one or more communication protocols. The communication interface 1130 may comprise at least one transmitter (Tx) and at least one receiver (Rx) that may be integrated to the apparatus 1100 or that the apparatus 1100 may be connected to. The communication interface 1130 may provide means for performing some of the blocks and/or functions (e.g., transmitting and receiving) for one or more example embodiments described above. The communication interface 1130 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1130 provides the apparatus with communication capabilities to communicate in the wireless communication network. The communication interface 1130 may, for example, provide a radio, cable or fiber interface to one or more network elements 104 of a radio access network, and/or to one or more consumers 307.

It is to be noted that the apparatus 1100 may further comprise various components not illustrated in FIG. 11. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising means for:

    receiving, from one or more network elements of a radio access network or a core network, information indicating an energy production capability of the one or more network elements;
    determining one or more policies for optimizing at least one of energy consumption or carbon dioxide emissions of the one or more network elements,
    wherein the determination is based at least on the information indicating the energy production capability, and an energy demand level of one or more consumers of energy produced by the one or more network elements; and
    transmitting, to the one or more network elements, information indicating the one or more policies,
    wherein the one or more policies indicate one of:

    one or more energy consumption thresholds that should not be exceeded by the one or more network elements for a period of time, or
    one or more energy consumption thresholds that should be exceeded by the one or more network elements for a period of time when the one or more network elements are powered by renewable energy.

2. The apparatus according to claim 1, further comprising means for:

    receiving, from the one or more network elements, statistics related to compliance with the one or more policies, wherein the statistics comprise metrics indicative of energy consumed by the one or more network elements relative to the one or more energy consumption thresholds;
    determining, based at least on the statistics, one or more further policies for optimizing the at least one of the energy consumption or the carbon dioxide emissions of the one or more network elements; and
    transmitting the one or more further policies to the one or more network elements.

3. The apparatus according to any preceding claim, wherein the determination is based further on a cost of energy consumed by the one or more network elements.

4. The apparatus according to any preceding claim, further comprising means for:

estimating, based on the one or more policies, an amount of energy to be provided to the one or more consumers from the one or more network elements; and

transmitting, to the one or more consumers, information indicating the estimated amount of energy to be provided.

5. The apparatus according to any preceding claim, further comprising means for:

receiving, from the one or more consumers, an indication indicating an energy need threshold above which energy from the one or more network elements is not needed; and

transmitting, to the one or more network elements, an indication indicating the energy need threshold above which energy from the one or more network elements is not needed by the one or more consumers.

6. The apparatus according to any preceding claim, wherein the energy production capability of the one or more network elements is based on waste heat generated by the one or more network elements, and wherein the one or more consumers comprise one or more heat consumers of the waste heat generated by the one or more network elements.

7. The apparatus according to any preceding claim, wherein the information indicating the energy production capability comprises a metric indicating net surplus heat produced by the one or more network elements.

8. The apparatus according to any preceding claim, wherein the apparatus comprises a network function of the core network, or a near-real-time radio access network intelligent controller, or a non-real-time radio access network intelligent controller.

9. A network element of a radio access network or a core network, the network element comprising means for:

transmitting, to a network function, information indicating an energy production capability of the network element;

receiving, from the network function, information indicating one or more policies for optimizing at least one of energy consumption or carbon dioxide emissions of the network element,

wherein the one or more policies are based at least on the information indicating the energy production capability, and an energy demand level of one or more consumers of energy produced by the network element; and

applying the one or more policies,

wherein the one or more policies indicate one of:

one or more energy consumption thresholds that should not be exceeded by the network element for a period of time, or

one or more energy consumption thresholds that should be exceeded by the network element for a period of time when the network element is powered by renewable energy.

10. The network element according to claim 9, further comprising means for:

obtaining statistics related to compliance with the one or more policies, wherein the statistics comprise metrics indicative of energy consumed by the network element relative to the one or more energy consumption thresholds; and

transmitting the statistics to the network function.

11. The network element of any of claims 9 to 10, wherein the energy production capability of the network element is based on waste heat generated by the network element, and wherein the one or more consumers comprise one or more heat consumers of the waste heat generated by the network element.

12. The network element of any of claims 9 to 11, further comprising means for:

receiving, from the network function, an indication indicating an energy need threshold above which energy from the network element is not needed by the one or more consumers; and

adjusting energy transfer from the network element towards the one or more consumers according to the energy need threshold.

13. A method comprising:

receiving, from one or more network elements of a radio access network or a core network, information indicating an energy production capability of the one or more network elements;

determining one or more policies for optimizing at least one of energy consumption or carbon dioxide emissions of the one or more network elements,

wherein the determination is based at least on the information indicating the energy production capability, and an energy demand level of one or more consumers of energy produced by the one or more network elements; and transmitting, to the one or more network elements, information indicating the one or more policies, wherein the one or more policies indicate one of:

one or more energy consumption thresholds that should not be exceeded by the one or more network elements for a period of time, or

one or more energy consumption thresholds that should be exceeded by the one or more network elements for a period of time when the one or more network elements are powered by renewable energy.

14. A method performed by a network element of a radio access network or a core network, the method comprising:

transmitting, to a network function, information indicating an energy production capability of the network element, receiving, from the network function, information indicating one or more policies for optimizing at least one of energy consumption or carbon dioxide emissions of the network element,

wherein the one or more policies are based at least on the information indicating the energy production capability, and an energy demand level of one or more consumers of energy produced by the network element; and applying the one or more policies,

wherein the one or more policies indicate one of:

one or more energy consumption thresholds that should not be exceeded by the network element for a period of time, or

one or more energy consumption thresholds that should be exceeded by the network element for a period of time when the network element is powered by renewable energy.

15. A non-transitory computer readable medium comprising program instructions which, when executed by an apparatus, cause the apparatus to perform at least the following:

receiving, from one or more network elements of a radio access network or a core network, information indicating an energy production capability of the one or more network elements,

determining one or more policies for optimizing at least one of energy consumption or carbon dioxide emissions of the one or more network elements,

wherein the determination is based at least on the information indicating the energy production capability, and an energy demand level of one or more consumers of energy produced by the one or more network elements; and transmitting, to the one or more network elements, information indicating the one or more policies, wherein the one or more policies indicate one of:

one or more energy consumption thresholds that should not be exceeded by the one or more network elements for a period of time, or

one or more energy consumption thresholds that should be exceeded by the one or more network elements for a period of time when the one or more network elements are powered by renewable energy.

FIG. 1

FIG. 2

320: External
information
source

110: Core network

303: NRF

301: EWHMF

302: AMF

311: N2

312: SBI

104: RAN node

304: Energy
consumption
manager

305: Heat
manager

307:
Consumer

306: Heat
producer

FIG. 3

FIG. 4

**301** EWHMF

**104** RAN node

**307** Consumer

501: RAN configuration etc.

502: Performance data

503: Indicate energy production capability

504: Indicate energy demand level

505: Obtain energy cost information

506: Determine one or more policies

507: Estimate energy amount to be provided

508: Indicate estimated energy amount

509: Indicate the one or more policies

510: Apply the one or more policies

511: Obtain statistics

512: Statistics

513: Indicate energy not needed

514: Indicate energy not needed

515: Stop energy transfer

FIG. 5

| 601 | Receive information indicating energy production capability |
|---|---|
| 602 | Determine one or more policies |
| 603 | Transmit information indicating the one or more policies |

FIG. 6

| 701 | Receive information indicating energy production capability |
|---|---|
| 702 | Receive energy demand level and/or energy cost information |
| 703 | Determine one or more policies |
| 704 | Transmit information indicating the one or more policies |
| 705 | Receive statistics |

FIG. 7

| 801 | Transmit information indicating energy production capability |
| 802 | Receive information indicating one or more policies |
| 803 | Apply the one or more policies |

FIG. 8

| 901 | Transmit information indicating energy production capability |
| 902 | Receive information indicating one or more policies |
| 903 | Apply the one or more policies |
| 904 | Obtain statistics |
| 905 | Transmit the statistics |

FIG. 9

1000

FIG. 10

1100

FIG. 11

Europäisches
Patentamt

European
Patent Office

Office européen
des brevets

# EUROPEAN SEARCH REPORT

**Application Number**

EP 25 15 4299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/361100 A1 (DIXIT GAURAV [SE] ET AL) 10 November 2022 (2022-11-10) <br> * abstract * <br> * paragraph [0001] - paragraph [0012] * <br> * paragraph [0025] - paragraph [0084] * <br> * figures 1-14 * <br> * claims 1-24 * <br> ----- | 1-15 | INV. <br> H04L41/0833 <br> H04L41/0853 <br> H04L41/0894 <br> H04L43/16 <br> H04W28/02 <br> H04W52/02 |
| A | US 11 431 170 B1 (GUO DEKE [CN] ET AL) 30 August 2022 (2022-08-30) <br> * abstract * <br> * column 1, line 7 - column 4, line 37 * <br> * column 5, line 32 - column 17, line 40 * <br> * figures 1-8I * <br> * claims 1-13 * <br> ----- | 1-15 | ADD. <br> H04L41/142 <br> H04L41/0826 |
| A | US 8 831 672 B2 (FRENGER PÅL [SE]; LINNELL OVE [SE] ET AL.) 9 September 2014 (2014-09-09) <br> * abstract * <br> * column 1, line 6 - column 2, line 67 * <br> * column 3, line 44 - column 11, line 45 * <br> * figures 1-6 * <br> * claims 1-24 * <br> ----- | 1-15 | |
| A | US 9 148 850 B2 (HALLBERG HELENE [SE]; ÖSTERLING JACOB [SE] ET AL.) 29 September 2015 (2015-09-29) <br> * abstract * <br> * column 1, line 6 - line 67 * <br> * column 2, line 35 - column 13, line 59 * <br> * figures 1-13 * <br> * claims 1-15 * <br> ----- <br> -/-- | 1-15 | **TECHNICAL FIELDS SEARCHED (IPC)** <br> H04L <br> H04W |

The present search report has been drawn up for all claims

| Place of search | Date of completion of the search | Examiner |
|---|---|---|
| Munich | 26 June 2025 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Application Number

EP 25 15 4299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DUSIT NIYATO ET AL: "Adaptive Power Management for Wireless Base Station in Smart Grid Environment", ARXIV.ORG, CORNELL UNIVERSITY LIBRARY, 201 OLIN LIBRARY CORNELL UNIVERSITY ITHACA, NY 14853, 28 January 2014 (2014-01-28), XP080004094, DOI: 10.1109/MWC.2012.6393517 * the whole document * | 1-15 | |

-----

|  | TECHNICAL FIELDS SEARCHED (IPC) |
|---|---|

The present search report has been drawn up for all claims

| Place of search | Date of completion of the search | Examiner |
|---|---|---|
| Munich | 26 June 2025 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 15 4299

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2025

| Patent document cited in search report | Publication date | Patent family member(s) | Publication date |
|---|---|---|---|
| US 2022361100 A1 | 10-11-2022 | EP 4035248 A1<br>US 2022361100 A1<br>WO 2021061028 A1 | 03-08-2022<br>10-11-2022<br>01-04-2021 |
| US 11431170 B1 | 30-08-2022 | NONE | |
| US 8831672 B2 | 09-09-2014 | EP 2510728 A1<br>US 2012252525 A1<br>WO 2011071425 A1 | 17-10-2012<br>04-10-2012<br>16-06-2011 |
| US 9148850 B2 | 29-09-2015 | CN 102550094 A<br>EP 2481244 A1<br>US 2012289224 A1<br>WO 2011034476 A1 | 04-07-2012<br>01-08-2012<br>15-11-2012<br>24-03-2011 |

EPO FORM P0459

For more details about this annex : see Official Journal of the European Patent Office, No. 12/82